Europäisches Patentamt

European Patent Office

Office européen des brevets

(11) Veröffentlichungsnummer: **0 304 715 B1**

(12) **EUROPÄISCHE PATENTSCHRIFT**

(45) Veröffentlichungstag der Patentschrift: **24.06.92**

(21) Anmeldenummer: **88112887.0**

(22) Anmeldetag: **08.08.88**

(51) Int. Cl.⁵: **C01B 33/02**

(54) Verfahren zur kontinuierlichen Raffination von Silicium.

(30) Priorität: **19.08.87 DE 3727646**

(43) Veröffentlichungstag der Anmeldung:
**01.03.89 Patentblatt 89/09**

(45) Bekanntmachung des Hinweises auf die
Patenterteilung:
**24.06.92 Patentblatt 92/26**

(84) Benannte Vertragsstaaten:
**BE DE FR IT**

(56) Entgegenhaltungen:
**DE-A- 3 405 613**
**DE-A- 3 504 723**
**US-A- 3 442 622**
**US-A- 4 298 423**

(73) Patentinhaber: **BAYER AG**

**W-5090 Leverkusen 1 Bayerwerk(DE)**

(72) Erfinder: **Kurz, Günter, Dr.**
**Niederrheinstrasse 288**
**W-4000 Düsseldorf 31(DE)**
Erfinder: **Schwirtlich, Ingo, Dr.**
**Hausweberstrasse 26**
**W-4150 Krefeld(DE)**
Erfinder: **Gebauer, Klaus, Dr.**
**Scheiblerstrasse 85**
**W-4150 Krefeld(DE)**

**Beschreibung**

Die vorliegende Erfindung betrifft ein kontinuierliches Verfahren zur Raffination von Silicium, insbesondere Siliciumgranulat.

Für eine Vielzahl von Anwendungen, z.B. bei der Herstellung von $Si_3N_4$ aus Siliciumpulver für hochreine Keramiken oder auch in der Photovoltaik, wird hochreines Silicium benötigt. Heute wird dafür überwiegend das sehr reine aber auch teure Halbleitersilicium eingesetzt.

Zur Erzielung einer größeren Wirtschaftlichkeit wird weltweit an der Entwicklung kostengünstiger Herstellungsverfahren für reines Silicium gearbeitet. Die am weitesten entwickelten Prozesse beruhen auf der Reinigung von billigem aber verunreinigtem Silicium, welches in großen Mengen durch carbothermische Reduktion von Quarz gewonnen wird, der Herstellung von reinem Silicium durch Einsatz von vorgereinigtem Kohlenstoff und Quarz bei der carbothermischen Reduktion und der aluminothermischen Reduktion von Siliciumtetrachlorid mit Aluminium.

In allen Fällen sind zusätzliche Reinigungsoperationen erforderlich, um die zu hohen Fremdatomgehalte an Bor, Phosphor, Kohlenstoff, Metallen, Metalloxiden und Sauerstoff auf Konzentrationen im ppm-Bereich zu verringern.

Es sind Verfahren bekannt, mit denen diese Verunreinigungen reduziert werden können. Um die hohen Gehalte an Siliciumdioxid und Kohlenstoff, der vorwiegend in Form von Siliciumcarbid vorliegt, in dem durch carbothermische Reduktion von Quarz gewonnenen Silicium zu reduzieren, werden in der DE-A 3 411 955 und der EP-A 0 160 294 Verfahren angegeben, bei denen schmelzflüssiges Silicium über Filter aus Graphit oder SiC/Si-Verbundwerkstoff filtriert wird, wobei die festen Bestandteile im Filter zurückbleiben. Diese Methode kann unter wirtschaftlichen Gesichtspunkten nicht befriedigen, da sich die Filterschicht im Laufe des Betriebes zusetzt und es dadurch zum Abbruch der Reinigungsoperation kommt. Zur Beseitigung der Störung müßte der Reaktor von ca. 1420°C abgekühlt, gereinigt und das Filtermaterial verworfen werden.

Weiterhin ist aus der DE-A 34 03 131 eine Verfahren bekannt, bei dem das Silicium in einem Graphittiegel aufgeschmolzen wird, wodurch sich der nicht reduzierte Quarz und die nicht reagierte Kohle an der Tiegelwand ansammeln. In Dauerbetrieb kommt es dabei zu Schlackenansammlungen an den Tiegelwänden, die schließlich zur Unbrauchbarkeit des Tiegels führen, wodurch hohe Kosten verursacht werden.

In den Patentanmeldungen DE-A 3 416 559 und DE-A 3 303 691 werden Verfahren beschrieben, bei denen durch Zentrifugieren und Sedimentieren feste SiC- und $SiO_2$-Verunreinigungen aus Siliciumschmelzen abgetrennt werden,

Um gelöste Verunreinigungen aus schmelzflüssigem Silicium zu entfernen, sind aus der Patentliteratur Verfahren bekannt (DE-A 2 623 413, DE-A 2 929 089, EP-A 7063, DE-A 3 504 723, BR-A 83/6289, US-A 4 312 849, FR-A 2 465 684, US-A 4 298 423, DE-A 2 944 975), in denen die Schmelze mit verschiedenen Gasen beaufschlagt wird.

Nach diesen Verfahren ist zwar die gezielte Entfernung einzelner Fremdstoffe möglich, die gleichzeitige Reduzierung aller Fremdatomkonzentrationen auf das für Solarzellen erforderliche Maß wird jedoch nicht erreicht. Inbesondere ist nach diesem Verfahren eine wirtschaftliche Entfernung von Metalloxiden, insbesondere Aluminiumoxid, nicht möglich. Auch weisen diese Verfahren den Nachteil auf, daß sie nur diskontinuierlich betrieben werden können.

Es ist ferner gemäß US-A 4 242 175 ein Verfahren zum Reinigen von Silicium bekannt, bei dem pulver- oder granulatförmiges Silicium aufgeschmolzen und derart auf einen beispielsweise rippig ausgeformten Körper aufgetragen wird, daß das Silicium als Flüssigkeitsfilm an dem Körper herunterfließt.

Das Ziel der vorliegenden Erfindung ist es daher, ein wirtschaftliches Verfahren zur Raffination von Silicium zur Verfügung zu stellen, welches die oben beschriebenen Nachteile nicht aufweist.

Überraschenderweise konnte nun ein Verfahren gefunden werden, welches diese Anforderungen in äußerst wirtschaftlicher Weise erfüllt. Dieses Verfahren ist Gegenstand dieser Erfindung. Es handelt sich hierbei um ein kontinuierliches Verfahren zur Raffination von Silicium, wobei in einer ersten Stufe Silicium in Form von Pulver oder Granulat in großflächigem Kontakt mit einem siliciumresistenten Körper zu einem Siliciumschmelzfilm geschmolzen, so daß Metalloxide abgetrennt werden und in einer zweiten Stufe dieser Siliciumschmelzfilm kontinuierlich mit reaktiven Gasen behandelt und anschließend das Silicium kontinuierlich kristallisiert wird.

Nach diesem Verfahren kann beliebig hergestelltes Silicium gereinigt werden, in Form grober Stücke oder als Granulat, das z.B. durch Brechen und Mahlen erhalten wird. Besonders gute Ergebnisse werden jedoch erfindungsgemäß erzielt, wenn das Silicium in Granulatform eingesetzt wird, welches kontinuierlich durch Reduktion von Siliciumtetrachlorid mit Aluminiumgrieß erhalten wird.

2

Die Herstellung eines solchen Siliciumgranulates ist Gegenstand der EP-A 123 100 und erfolgt durch aluminothermische Reduktion von Siliciumtetrachlorid.

Bevorzugt wird erfindungsgemäß sowohl das Schmelzen als auch die Gasbehandlung des Siliciums in Kontakt mit einer und/oder mehreren Flächen aus siliciumresistenten Werkstoffen, die geneigt angeordnet sind, durchgeführt. Dabei haben sich geneigte Flächen, die die Form von Röhren und/oder Rinnen aufweisen, als besonders geeignet erwiesen. Eine besonders bevorzugte Ausführungsform des erfindungsgemäßen Verfahrens besteht darin, daß eine Vielzahl von Flächen durch eine Schüttung und/oder einen Stapel von siliciumresistenten Körpern gebildet wird.

Erfindungsgemäß bestehen die siliciumresistenten Materialien aus Keramiken, wie $SiC$, $Si_3N_4$ oder $Al_2O_3$ und/oder Mischkeramiken und/oder hochdichtem Graphit und/oder aus Quarzglas.

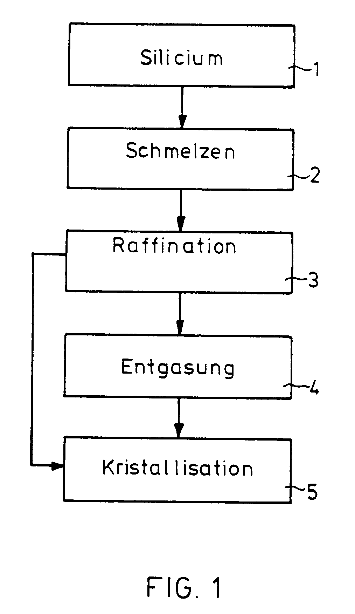

Anhand des Verfahrensschemas in Fig. 1 wird das erfindungsgemäße Verfahren im folgenden dargestellt. Ein nach der EP-A 123 100 kontinuierlich hergestelltes Siliciumgranulat (1), welches vorteilhaft eine mittlere Teilchengröße von ca. 1 mm besitzt, enthält noch gewisse Konzentrationen von Metallen, insbesondere Aluminium sowie Metalloxiden. Dieses Granulat wird in einem ersten Schritt in Kontakt mit einem geeigneten siliciumresistenten Material als dünner Film geschmolzen (2). Dieses Schmelzen erfolgt kontinuierlich in einer Einrichtung, die aus einem oder mehreren parallelen, schräg angeordneten Rohren oder Rinnen besteht. Dabei werden Metalloxide von dem schmelzflüssigen Silicium abgetrennt. Sie sammeln sich in Form eines lockeren Pulvers an der Behälterwand an und können mechanisch oder pneumatisch leicht entfernt werden.

In der zweiten Stufe wird die Schmelze dann in die nachfolgende Raffinationsvorrichtung (3) geleitet, in der sie über eine lockere Schüttung siliciumresistenter Partikel fließt, deren Zwischenräume von einem Reaktionsgas durchströmt werden.

Besonders bevorzugt ist dabei die Ausführungsform des erfinderischen Verfahrens, gemäß der als reaktive Gase Wasserstoff, Wasserdamof, Siliciumtetrahalogenid, Halogensilan und/oder Chlorwasserstoff, gegebenenfalls unter Zusatz von Inertgas, eingesetzt werden.

Die gleichzeitige Zugabe dieser genannten Gase zeigt dabei häufig einen synergistischen Effekt bei der Entfernung im Silicium gelöst vorliegender Verunreinigungen.

Dieses Reaktionsgas dient der kontinuierlichen Entfernung gelöster Verunreinigungen im Silicium, wie Metallen, Bor und je nach Partikelmaterial auch Kohlenstoff. Als Reaktionsgas hat sich die gleichzeitige Zugabe von Siliciumtetrachlorid, Chlorwasserstoff, Wasserstoff, Halogensilanen und Wasserdampf als besonders wirksam erwiesen.

Zur Entfernung gelöster Gase kann die Schmelze anschließend einer Vakuumbehandlung unterzogen (4) oder direkt der Kristallisationsstation (5) zugeführt werden, in der sie dem Stand der Technik entsprechend nach dem in EP-A 218 088 angegebenen Verfahren chargenweise zu Blöcken oder wie in der DE-A 3 419 137 beschrieben kontinuierlich zu Folien kristallisiert wird. Für die erfolgreiche Durchführung des Prozesses ist es erforderlich, daß in den Aggregaten (2) bis (4) die Temperatur oberhalb von $1420\,°C$ der Schmelztemperatur von Silicium liegt.

In einer besonders günstigen Ausführungsform des erfindungsgemäßen Verfahrens wird das zu raffinierende Silicium zunächst oberflächlich oxidiert. Für den späteren Einsatzzweck des erfindungsgemäß gereinigten Siliciums kann es von Vorteil sein, wenn die Kristallisation des Siliciums kontinuierlich zu Granulat oder Folien erfolgt.

Anhand des nachfolgenden Beispiels soll das Verfahren näher erläutert werden, ohne den Erfindungsgedanken damit einzuschränken.

Beispiel

Durch kontinuierliche Reduktion von gereinigtem Siliciumtetrachlorid mit Aluminiumgrieß wurde in einem Drehrohrreaktor ein Siliciumgrieß mit einer mittleren Teilchengröße von ca. 1 mm erhalten. In diesem Ausgangsmaterial wurden die in Tabelle 1 angegebenen Verunreinigungen analysiert, die überwiegend auf die Fremdatomgehalte des eingesetzten Aluminiums zurückzuführen sind.

10 kg dieses Siliciumgrießes wurden über einen Zeitraum von 10 h kontinuierlich über eine Förderschnecke in ein geneigtes, auf Siliciumschmelztemperatur erhitztes Graphitrohr eingetragen und darin aufgeschmolzen. Bei einer Rohrneigung von $25°$ wurde ein optimaler Produktfluß erreicht. Als Schutzgas wurde Argon verwendet. Während des kontinuierlichen Aufschmelzens wurde eine Trennung von Schlacken und Siliciumschmelze beobachtet. Die Schlacke wird während des Aufschmelzens ausgeschieden und reichert sich an der Produkteintragsseite des Schmelzrohres als lockerer Staub an. Die Schlacke konnte während des laufenden Versuchs mechanisch über einen Schaber ausgestoßen werden. Sie bestand zu 85 % aus $Al_2O_3$ sowie geringen Mengen von SiC mit anhaftenden Siliciumresten. Insgesamt wurden über den Zeitraum von 10 h 106 g Schlacke erhalten. Die am Rohrende abgenommene Siliciumschmelze wurde dem nächsten Raffinationsschritt kontinuierlich zugeführt, indem sie in ein senkrecht gestelltes mit SiC-Scherben gefülltes aus $Al_2O_3$-Keramik bestehendes und auf Siliciumschmelztemperatur beheiztes Rohr eingetragen wurde. Durch die SiC-Scherben wurde eine feine Verteilung des Siliciums in Form eines dünnen Siliciumschmelzfilms bewirkt. Dieser Schmelzfilm wurde im Gegenstrom mit einer reaktiven Gasmischung bestehend aus 18 l/h Trichlorsilan, 30 l/h Siliciumtetrachlorid, 50 l/h Wasserstoff, 2 l/h Wasserdampf sowie 10 l/h Argon begast (die Mengenangaben beziehen sich auf 100° C). Die nach dem Durchlaufen der Begasungsstrecke am unteren Rohrende in Tropfenform austretende Siliciumschmelze wurde unter anhaltender Begasung über eine Fallstrecke kristallisiert und in Form von Pellets in einer Keramikschale gesammelt.

Die Analyse des raffinierten Siliciums ist in Tabelle 1 angegeben.

### <u>Tabelle 1</u>  Verunreinigungen im Silicium
### (wenn nicht anders angegeben in ppm)

| Al | B | Ba | Ca | Cr | Cu | Fe | Mg | Ti | C | O |
|---|---|---|---|---|---|---|---|---|---|---|
| **Ausgangsmaterial** | | | | | | | | | | |
| 1,1 [%] | 4 | 0,2 | 3 | 2 | 6 | 350 | 3 | 33 | 20 | 0,7 [%] |
| **Reinsilicium** | | | | | | | | | | |
| 0,5 | 0,2 | 0,1 | 0,2 | 0,1 | 0,2 | 0,1 | 0,1 | 0,5 | 10 | 60 |

**Patentansprüche**

1. Kontinuierliches Verfahren zur Raffination von Silicium, dadurch gekennzeichnet, daß in einer ersten Stufe Silicium in Form von Pulver oder Granulat in großflächigem Kontakt mit einem siliciumresistenten Körper zu einem Siliciumschmelzfilm geschmolzen, so daß Metalloxide abgetrennt werden und in der zweiten Stufe dieser Siliciumschmelzfilm kontinuierlich mit reaktiven Gasen behandelt und anschließend das Silicium kontinuierlich kristallisiert wird.

2. Verfahren gemäß Anspruch 1, dadurch gekennzeichnet, daß das Silicium in Granulatform eingesetzt wird, welches kontinuierlich durch Reduktion von Siliciumtetrachlorid mit Aluminiumgrieß erhalten wird.

3. Verfahren gemäß einem der Ansprüche 1 oder 2, dadurch gekennzeichnet, daß sowohl das Schmelzen als auch die Gasbehandlung des Siliciums in Kontakt mit einer und/oder mehreren Flächen aus siliciumresistenten Werkstoffen erfolgt, die geneigt angeordnet sind.

4. Verfahren gemäß Anspruch 3, dadurch gekennzeichnet, daß die geneigten Flächen die Form von Rohren und/oder Rinnen besitzen.

5. Verfahren gemäß einem der Ansprüche 3 oder 4, dadurch gekennzeichnet, daß eine Vielzahl von Flächen durch eine Schüttung und/oder einen Stapel von siliciumresistenten Körpern gebildet wird.

6. Verfahren gemäß einem oder mehrerer der Ansprüche 1 bis 5, dadurch gekennzeichnet, daß die siliciumresistenten Materialien aus Keramiken, wie SiC, $Si_3N_4$ oder $Al_2O_3$ und/oder Mischkeramiken und/oder hochdichtem Graphit und/oder aus Quarzglas bestehen.

7. Verfahren gemäß einem oder mehrerer der Ansprüche 1 bis 6, dadurch gekennzeichnet, daß als reaktive Gase Wasserstoff, Wasserdampf, Siliciumtetrahalogenid, Halogensilan und/oder Chlorwasserstoff, gegebenenfalls unter Zusatz von Inertgas, eingesetzt werden.

8. Verfahren gemäß einem oder mehrerer der Ansprüche 1 bis 7, dadurch gekennzeichnet, daß das zu raffinierende Silicium zunächst oberflächlich oxidiert wird.

9. Verfahren gemäß einem oder mehrerer der Ansprüche 1 bis 8, dadurch gekennzeichnet, daß die Kristallisation des Siliciums kontinuierlich zu Granulat oder Folien erfolgt.

**Claims**

1. A continuous process for refining silicon, characterized in that, in a first stage, silicon in powder or granular form is melted in contact over a large surface area with a silicon-resistant material to form a film of silicon melt, so that metal oxides are removed and, in the second stage, the silicon melt film is continuously treated with reactive gases and the silicon is then continuously crystallized.

2. A process as claimed in claim 1, characterized in that the silicon is used in the granular form obtained continuously by reduction of silicon tetrachloride with aluminium granules.

3. A process as claimed in claim 1 or 2, characterized in that both the melting step and also the gas treatment of the silicon are carried out in contact with one and/or more inclined surfaces of silicon-resistant materials.

4. A process as claimed in claim 3, characterized in that the inclined surfaces are in the form of tubes and/or channels.

5. A process as claimed in claim 3 or 4, characterized in that a plurality of surfaces is formed by a pile and/or stack of silicon-resistant particles.

6. A process as claimed in one or more of claims 1 to 5, characterized in that the silicon-resistant materials consist of ceramics, such as $SiC$, $Si_3N_4$ or $Al_2O_3$, and/or mixed ceramics and/or high-density graphite and/or quartz glass.

7. A process as claimed in one or more of claims 1 to 6, characterized in that hydrogen, steam, silicon tetrahalide, halogen silane and/or hydrogen chloride, optionally with addition of an inert gas, are used as the reactive gases.

8. A process as claimed in one or more of claims 1 to 7, characterized in that the silicon to be refined is first surface-oxidized.

9. A process as claimed in one or more of claims 1 to 8, characterized in that the silicon is crystallized continuously to form granules or films.

**Revendications**

1. Procédé d'affinage continu de silicium, caractérisé en ce que dans une première étape, on fait fondre du silicium sous forme de poudre ou de granules au contact, sur une grande surface, d'un corps résistant au silicium, pour former une pellicule de silicium fondu, de manière à séparer des oxydes de métaux et, dans une seconde étape, on traite en continu cette pellicule de silicium fondu avec des gaz réactifs, puis on fait cristalliser en continu le silicium.

2. Procédé suivant la revendication 1, caractérisé en ce que le silicium est utilisé sous la forme de granules que l'on obtient en continu par réduction de tétrachlorure de silicium avec de la grenaille d'aluminium.

3. Procédé suivant l'une des revendications 1 et 2, caractérisé en ce qu'on effectue tant la fusion que le traitement par un gaz du silicium au contact d'une et/ou de plusieurs surfaces de matériaux résistants au silicium, qui ont une disposition inclinée.

4. Procédé suivant la revendication 3, caractérisé en ce que les surfaces inclinées ont la forme de tubes et/ou de canaux.

5

**5.** Procédé suivant l'une des revendications 3 et 4, caractérisé en ce qu'une multiplicité de surfaces sont formées par un entassement et/ou un empilement de corps résistants au silicium.

**6.** Procédé suivant une ou plusieurs des revendications 1 à 5, caractérisé en ce que les matériaux résistants au silicium sont constitués de céramiques telles que SiC, $Si_3N_4$ ou $Al_2O_3$ et/ou de céramiques mixtes et/ou de graphite très dense et/ou de verre au quartz.

**7.** Procédé suivant une ou plusieurs des revendications 1 à 6, caractérisé en ce qu'on utilise comme gaz réactifs l'hydrogène, la vapeur d'eau, un tétrahalogénure de silicium, un halogénosilane et/ou le chlorure d'hydrogène, le cas échéant avec utilisation d'un gaz inerte.

**8.** Procédé suivant une ou plusieurs des revendications 1 à 7, caractérisé en ce que le silicium à affiner est tout d'abord oxydé en surface.

**9.** Procédé suivant une ou plusieurs des revendications 1 à 8, caractérisé en ce que la cristallisation du silicium en granules ou en feuilles est effectuée en continu.

```
┌─────────────────────┐
│      Silicium       │──1
└─────────────────────┘
          │
          ▼
┌─────────────────────┐
│      Schmelzen      │──2
└─────────────────────┘
          │
          ▼
┌─────────────────────┐
│     Raffination     │──3
└─────────────────────┘
          │
          ▼
┌─────────────────────┐
│      Entgasung      │──4
└─────────────────────┘
          │
          ▼
┌─────────────────────┐
│   Kristallisation   │──5
└─────────────────────┘
```

FIG. 1